# EUROPEAN PATENT SPECIFICATION

(11) **EP 4 247 651 B1**
(45) Date of publication and mention of the grant of the patent: **21.10.2026**
(21) Application number: 21823392.2
(22) Date of filing: 11.11.2021
(51) Int. Cl.: B60G 17/019, B60G 17/018, B60G 7/00, B60G 17/0185

(54) **SYSTEM COMPRISING A STATUS TRACKING SYSTEM AND A PART INCLUDED IN A SUSPENSION SYSTEM OF A VEHICLE**
SYSTEM MIT EINEM ZUSTANDSVERFOLGUNGSSYSTEM UND EINEM TEIL EINER AUFHÄNGUNG EINES FAHRZEUGS
SYSTÈME COMPRENANT UN SYSTÈME DE SUIVI D'ÉTAT ET UNE PIÈCE INTÉGRÉE À UN SYSTÈME DE SUSPENSION D'UN VÉHICULE

(30) Priority: 17.11.2020 TR 202018385
(43) Date of publication of application: 27.09.2023
(73) Proprietor: Teknorot Otomotiv Urunleri San. ve Tic. A.S., Sariyer/Istanbul (TR)
(72) Inventor: ASLAN, Cevat, Merkez Duzce (TR)
(74) Representative: Kaya, Erdem
(86) International application number: PCT/TR2021/051189
(87) International publication number: WO 2022/108558

(56) References cited:
- WO-A2-2010/117762
- US-A1- 2003 004 624
- US-A1- 2012 296 514
- US-A1- 2017 032 592

## Description

### TECHNICAL FIELD

The invention relates to a system comprising a status tracking system that monitors condition of a part included in a suspension system of a vehicle.

### PRIOR ART

Suspension and various steering parts, such as the wishbone in vehicles, can be deformed and form cracks over time. The estimated life span of these parts is obtained as a result of the tests; however, as a result of various effects, they can be deformed before the estimated time. Recognition of this deformation by the user may occur at further stages of deformation or may not occur at all. Deformations which are not noticed by the user can cause the parts to break down, as well as serious accidents.

Document CN106080072 describes a system in which the tension of such parts is measured by means of a stress sensor and a fault detection is made accordingly. However, it may cause inaccurate damage detection as the part may be subjected to excessive stress in various situations and conditions in which the vehicle operates, even if it is not deformed.

Document US2017/032592 relates to a system and a method for determining a status of a vehicle suspension system. Hereunder a vertical acceleration of the vehicle relative to a road surface is determined based on a position of a vehicle body. Based on a predetermined period of time, a peak value that corresponds to the vertical acceleration is calculated. The peak value is compared to a target peak value and, when the peak value meets a preset criteria, a notification of potential suspension degradation is issued.

Document WO2010/117762 relates to controllable suspension systems for large military vehicles that are used in a variety of conditions, including on road and off road. The land vehicle includes a computer system and suspension sensors located proximate the land engagers for measuring suspension parameters representative of suspension movements between the body and the land engagers and outputting a plurality of suspension sensor measurement outputs. The land vehicle includes controllable force suspension members located proximate the land engagers and the suspension sensors, the controllable force suspension members applying suspension travel forces between the body and the land engagers to control the suspension movements.

Document US2012/296514 relates to a method of conducting vehicle usage data analysis. The method includes providing usage data about at least one vehicle to a database. The usage data may be analyzed and compared to a member of a set of vehicle development models to determine whether to update a vehicle development model. The usage data may also be analyzed to determine whether to transmit a communication to a vehicle.

Document US2003/004624 relates to diagnostic/prognostic techniques, and more particularly, but not exclusively, relates to diagnostic and/or prognostic systems for machines, where the systems include sensors that communicate information through wireless transponders.

As a result, all the problems mentioned above have made it necessary to make an innovation in the relevant technical field.

### BRIEF DESCRIPTION OF THE INVENTION

The present invention relates to a system comprising a status tracking system and a part included in a suspension system of a vehicle, in order to eliminate the above-mentioned disadvantages and to bring new advantages to the related technical field.

An object of the invention is to provide a system that enables instantaneous tracking of part included in a suspension system of a vehicle.

Another object of the invention is to provide a system that enables the deformations in the part to be detected with an increased accuracy rate.

The present invention is a system according to claim 1.

Accordingly, the system comprises a status tracking system and a part included in a suspension system of a vehicle, wherein the status tracking system monitors condition of the part, wherein the status tracking system comprises a sensor unit connected to the body of the part, a processor unit configured to connect with the sensor unit in a manner receiving the measurements made by the mentioned sensor unit as input, wherein the sensor unit comprises a vibration sensor, a temperature sensor and a magnetic field sensor, wherein the measurements comprise measurement from each sensor of the sensor unit; the system comprises a memory unit and a user interface; and the mentioned processor unit is configured to obtain measurement information from the measurements it receives and generate a status information by classifying the measurement information according to reference values in the memory unit and display the status information on the user interface. Thus, the status of the part is monitored instantaneously and abnormal conditions are reported to the user instantly.

A possible embodiment of the invention characterized in that the processor unit is configured to calculate and obtain the variation of the measurement values of the mentioned measurement information in a predetermined range. Thus, instantaneous peak measurements consisting of environmental factors are prevented from causing incorrect status information.

According to the invention, the mentioned sensor unit comprises at least one vibration sensor. Thus, it is determined whether there is a crack in the part.

According to the invention, the sensor unit further comprises a temperature sensor and magnetic field sensor. Thus, the likelihood of changes in the measurement values due to environmental factors causing the detection of inaccurate crack or damage detection is reduced.

Another possible embodiment of the invention is characterized in that the processor unit is configured to take into account the measurements it receives from a vehicle sensor unit that generates a signal related to the motion of the vehicle while generating the status information. Thus, the measurements taken from the sensor unit are prevented from causing an incorrect damage detection in cases where the vehicle is on a hill, cornering fast, at high speed, or driving on a rough road.

Another possible embodiment of the invention is characterized in that the mentioned user interface is provided on a user terminal and that the status tracking system comprises a first communication unit for enabling the processor to send data to the user interface.

Another possible embodiment of the invention is characterized in that the mentioned first communication unit is configured to perform wireless communication.

Another possible embodiment of the invention is characterized in that it comprises a second communication unit to ensure that the status information and/or measurements generated by the mentioned processor unit are sent to a server. Thus, information about healthy and damaged parts can be collected on a server and transferred to other users or operators through the instant status server.

Another possible embodiment of the invention is characterized in that the mentioned memory unit is provided on a server. It is ensured that the memory unit is constantly updated, the measurement and status information values and references obtained from other vehicles and as a result, the status information determinations are optimized.

### BRIEF DESCRIPTION OF THE DRAWINGS

In Figure 1, a representative view of the system is shown.
In Figure 2, a representative view of the sensor unit is shown.

### DETAILED DESCRIPTION OF THE INVENTION

The subject of the invention is explained with examples that do not have any limiting effect and only for a better understanding of the subject in this detailed description.

There is provided a status tracking system (100) that monitors the condition of a part included in a suspension system of a vehicle. This part (200) may be a part (200) that is load-bearing or otherwise subjected to force. Cracking may occur in this part (200) over time, and such cracking may cause accidents. As an example, the said part (200) is a wishbone (suspension fork, suspension triangular arm) in the suspension system in this detailed description of the invention. The invention may also be applied to different parts (200) included in the suspension system of the vehicle. The vehicles mentioned here are land vehicles such as automobiles, buses, trucks, etc.

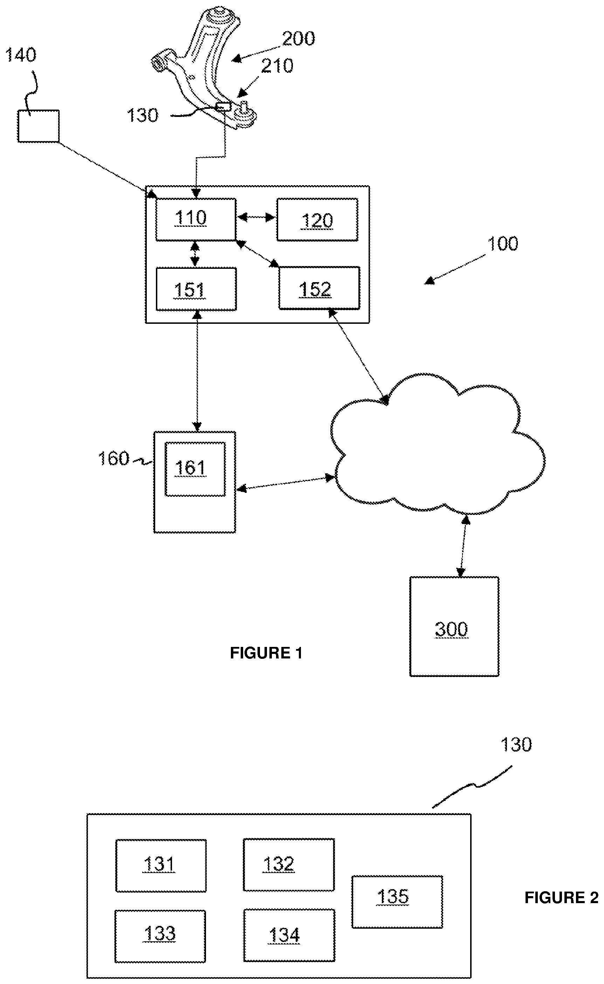

With reference to Figure 1, a sensor unit (130) is provided on the part (200). The sensor unit (130) includes a vibration sensor (132). The sensor unit (130) further comprises a temperature sensor (131), and an electric field sensor (134). The sensor unit (130) may be disposed in a slot in the part (200). The sensor unit (130) may be connected to the part (200) by adhesive in a possible embodiment of the invention.

A processor unit (110) is configured to receive measurements from the sensors in the sensor unit (130). The processor unit (110) may be a microprocessor. The processor unit (110) is associated with a memory unit (120) to read and write data. The processor unit (110) obtains a measurement information about the measurements it receives. The said measurement information may be a converted version of the measurements to a predetermined format. The measurement information may be the deviation (variation) of the measurements taken at a predetermined time interval in this exemplary embodiment.

The memory unit (120) contains reference values comprising measurement values and/or measurement information obtained as a result of the tests, where the parts (200) are tested in a controlled environment with sensors similar to the sensor unit (130). In these tests, the parts (200) are operated under normal operating conditions and measurements are taken, the measurements are taken by applying various effects and forces, and the reactions of the parts (200) are measured under several circumstances. Therefore, the characteristics of the measurements of the parts (200) in normal working, cracked, etc. conditions are determined and the threshold values can be determined according to the measurement values taken from the sensors. For example, the vibration sensor (132) receives vibration measurement having a particular characteristic when it is associated with a cracked part (200).

In the test phase, the damaged, cracked regions of the part (200) when forced are detected as a first region (210). The sensor unit (130) is placed around the mentioned first regions (210).

The processor unit (110) creates a status information by classifying the measurement information according to the reference values in the memory unit (120). The status information may indicate that the part (200) is cracked, that the part (200) is operating under normal conditions, etc.

The status tracking system (100) includes a user interface (161) associated with the processor unit (110). The user interface (161) may be a display connected to the electronic system of the vehicle. The processor unit (110) may also be the electronic control unit of the vehicle. The user interface (161) may be the display of a user terminal (160) in a possible embodiment. The mentioned user terminal (160) may be a mobile phone, tablet computer, etc. The status tracking system (100) may include a first communication unit (151) for enabling communication between the processor unit (110) and the user terminal (160). the mentioned communication unit can communicate preferably with a short distance wireless communication protocol as one of the protocols known in the art for providing wireless data exchange. The status tracking device may also include a second communication unit (152). The second communication unit (152) is configured to connect to a wide area network such as the Internet or to a cellular network. The processor may send measurement information or status information to a server (300) via the second communication unit (152) or the first communication unit (151) and the user terminal (160). Thus, the condition of the parts (200) in the vehicle can be observed remotely, and the measurements taken from the vehicles can be used to update and increase the reference values. The memory unit (120) may be located on the server (300) in a possible embodiment of the invention. In another embodiment of the invention, the server (300) updates the memory unit (120) in the vehicle periodically.

The processor unit (110) may also be associated with a vehicle sensor unit (140). The vehicle sensor unit (140) may include sensors that measure the condition of the vehicle. The vehicle sensor unit (140) may include sensors that measure the starting and stopping of the vehicle, its speed, orientation, the position of the steering wheel, its inclination in relation to the earth, its acceleration, the force of G applied on the same, etc. The sensor unit (130) produces the status information by considering the information it receives from the vehicle sensor as well as the measurement information. For example, the vibration measurements when the vehicle is on a slope are the same, even though the condition of the part (200) may differ according to the vibration measurements taken while the vehicle is driving on a flat road. The unevenness of the road on which the vehicle advances can also be a factor. The processor unit (110) makes the classification by considering this information.

The status tracking system (100) described above operates as follows:
The processor unit (110) receives information about the vehicle being started from the vehicle sensor unit (140) when the vehicle is started. It receives measurements from the sensor unit (130) and obtains measurement information until a predetermined time elapses. It classifies the measurement information according to the reference values in the memory unit (120) after the predetermined time elapses. It creates a status information as a result of the classification and enables it to be displayed on the user interface (161). For example, if the measurement information detects that it exceeds the thresholds in the reference values, it allows a warning to be generated in the user interface (161) to indicate a crack. The mentioned warning may be audible, visual, vibrational, etc. The status information may also be specified in the user interface (161) to indicate the remaining life of the part (200). For example, if the measurements taken are similar to the characteristics of the parts (200) which have been used slightly more than half of their life, as a result of the classification, they can be displayed by determining the percentage of the remaining life.

In a possible embodiment of the invention, the past measurements may be sent to the server (300) or the user interface (161) instantaneously.

The protection scope of the invention is specified in the attached claims and is not limited to the account given for exemplary purposes in this detailed description.

### REFERENCE NUMBERS IN THE DRAWINGS

- 100: Status tracking system
110 Processor unit
120 Memory unit
130 Sensor unit
131 Temperature sensor
132 Vibration sensor
133 Sound sensor
134 Magnetic field sensor
135 Position sensor
140 Vehicle sensor unit
151 First communication unit
152 Second communication unit
160 User terminal
161 User interface
- 200: Part
- 210: First region
- 300: Server

## Claims

1. A system comprising a status tracking system (100) and a part (200) included in a suspension system of a vehicle, wherein the status tracking system monitors condition of the part (200), wherein the status tracking system comprises a sensor unit (130) connected to the body of the part (200), a processor unit (110) configured to connect with the sensor unit (130) in a manner receiving the measurements made by the mentioned sensor unit (130) as input, wherein the sensor unit comprises a vibration sensor, a temperature sensor and magnetic field sensor, wherein the measurements comprise measurement from each sensor of the sensor unit; the system comprises a memory unit (120) and a user interface (161); and the mentioned processor unit (110) is configured to obtain measurement information from the measurements it receives and generate a status information by classifying the measurement information according to reference values in the memory unit (120) and display the status information in the user interface (161).

2. A system according to claim 1, ***characterized in that*** the processor unit (110) is configured to obtain the variation of the measurement values of the mentioned measurement information in a predetermined range.

3. A system according to claim 1, ***characterized in that*** the processor unit (110) is configured to take into account the measurements it receives from a vehicle sensor unit (140) that generates signal related to the motion state of the vehicle while generating the status information.

4. A system according to claim 1, ***characterized in that*** the mentioned user interface (161) is provided at a user terminal (160) and that the status tracking system (100) comprises a first communication unit (151) for enabling the processor to send data to the user interface (161).

5. A system according to claim 4, ***characterized in that*** the mentioned first communication unit (151) is configured to make wireless communication.

6. A system according to claim 1, ***characterized in that*** it comprises a second communication unit (152) to ensure that the status information and/or measurements generated by the mentioned processor unit (110) are sent to a server (300).

7. system according to claim 6, ***characterized in that*** the mentioned memory unit (120) is provided on a server (300).

8. A system according to claim 1, ***characterized in that*** the mentioned sensor unit (130) is placed in a slot provided in the part (200).

9. A system according to claim 1, ***characterized in that*** the mentioned sensor unit (130) is connected to the part (200) with an adhesive.

10. The system according to claim 1, wherein the part is a wishbone of the vehicle.

11. The system according to claim 1, **wherein** the processor unit is further configured to connect with a vehicle sensor unit and receive inclination measurements made by the vehicle sensor unit, wherein the inclination measurements are measurements of an inclination of the vehicle, and wherein the status information denotes a condition of the part determined by the processor unit based on the inclination measurements in addition to the part measurements.

## Patentansprüche

1. System, umfassend ein Statusverfolgungssystem (100) und ein Teil (200), das in einem Aufhängungssystem eines Fahrzeugs enthalten ist, wobei das Statusverfolgungssystem den Zustand des Teils (200) überwacht, wobei das Statusverfolgungssystem eine mit dem Körper des Teils (200) verbundene Sensoreinheit (130), eine Prozessoreinheit (110), die so konfiguriert ist, dass sie auf eine Weise mit der Sensoreinheit (130) verbunden ist, dass sie die von der genannten Sensoreinheit (130) durchgeführten Messungen als Eingabe empfängt, wobei die Sensoreinheit einen Vibrationssensor, einen Temperatursensor und einen Magnetfeldsensor umfasst, wobei die Messungen eine Messung von jedem Sensor der Sensoreinheit umfassen; das System eine Speichereinheit (120) und eine Benutzerschnittstelle (161) umfasst; und die genannte Prozessoreinheit (110) so konfiguriert ist, dass sie Messinformation aus den Messungen, die sie empfängt, erhält und eine Statusinformation durch Klassifizieren der Messinformation gemäß Referenzwerten in der Speichereinheit (120) erzeugt und die Statusinformation in der Benutzerschnittstelle (161) anzeigt.

2. System nach Anspruch 1, ***dadurch gekennzeichnet, dass*** die Prozessoreinheit (110) so konfiguriert ist, dass sie die Variation der Messwerte der genannten Messinformation in einem vorbestimmten Bereich erhält.

3. System nach Anspruch 1, ***dadurch gekennzeichnet, dass*** die Prozessoreinheit (110) so konfiguriert ist, dass sie bei der Erzeugung der Statusinformation die Messungen berücksichtigt, die sie von einer Fahrzeugsensoreinheit (140) empfängt, welche ein Signal erzeugt, das sich auf den Bewegungszustand des Fahrzeugs beziehen.

4. System nach Anspruch 1, ***dadurch gekennzeichnet, dass*** die genannte Benutzerschnittstelle (161) an einem Benutzerendgerät (160) vorgesehen ist und dass das Statusverfolgungssystem (100) eine erste Kommunikationseinheit (151) umfasst, um dem Prozessor das Senden von Daten an die Benutzerschnittstelle (161) zu ermöglichen.

5. System nach Anspruch 4, ***dadurch gekennzeichnet, dass*** die genannte erste Kommunikationseinheit (151) so konfiguriert ist, dass sie eine drahtlose Kommunikation herstellt.

6. System nach Anspruch 1, ***dadurch gekennzeichnet, dass*** es eine zweite Kommunikationseinheit (152) umfasst, um sicherzustellen, dass die von der genannten Prozessoreinheit (110) erzeugten Statusinformation und/oder Messungen an einen Server (300) gesendet werden.

7. System nach Anspruch 6, ***dadurch gekennzeichnet, dass*** die genannte Speichereinheit (120) auf einem Server (300) vorgesehen ist.

8. System nach Anspruch 1, ***dadurch gekennzeichnet, dass*** die genannte Sensoreinheit (130) in einen in dem Teil (200) vorgesehenen Schlitz eingesetzt ist.

9. System nach Anspruch 1, ***dadurch gekennzeichnet, dass*** die genannte Sensoreinheit (130) mit dem Teil (200) mittels eines Klebstoffs verbunden ist.

10. System nach Anspruch 1, wobei das Teil ein Querlenker des Fahrzeugs ist.

11. System nach Anspruch 1, **wobei** die Prozessoreinheit ferner so konfiguriert ist, dass sie mit einer Fahrzeugsensoreinheit verbunden ist und von der Fahrzeugsensoreinheit durchgeführte Neigungsmessungen empfängt, wobei die Neigungsmessungen Messungen einer Neigung des Fahrzeugs sind, und wobei die Statusinformation einen Zustand des Teils bezeichnet, der von der Prozessoreinheit auf der Grundlage der Neigungsmessungen zusätzlich zu den Messungen des Teils bestimmt wird.

## Revendications

1. Système comprenant un système de suivi d'état (100) et une pièce (200) comprise dans un système de suspension d'un véhicule, dans lequel le système de suivi d'état surveille la condition de la pièce (200), dans lequel le système de suivi d'état comprend une unité de capteur (130) connectée au corps de la pièce (200), une unité de processeur (110) configurée pour se connecter à l'unité de capteur (130) de manière à recevoir les mesures effectuées par l'unité de capteur mentionnée (130) en tant qu'entrée, dans lequel l'unité de capteur comprend un capteur de vibration, un capteur de température et un capteur de champ magnétique, dans lequel les mesures comprennent une mesure provenant de chaque capteur de l'unité de capteur ; le système comprend une unité de mémoire (120) et une interface utilisateur (161) ; et l'unité de processeur mentionnée (110) est configurée pour obtenir une information de mesure à partir des mesures qu'elle reçoit et générer une information d'état en classifiant l'information de mesure selon les valeurs de référence dans l'unité de mémoire (120) et afficher l'information d'état dans l'interface utilisateur (161).

2. Système selon la revendication 1, ***caractérisé en ce que*** l'unité de processeur (110) est configurée pour obtenir la variation des valeurs de mesure de l'information de mesure mentionnée dans une plage prédéterminée.

3. Système selon la revendication 1, ***caractérisé en ce que*** l'unité de processeur (110) est configurée pour prendre en compte les mesures qu'elle reçoit d'une unité de capteur de véhicule (140) qui génère un signal relatif à l'état de mouvement du véhicule lors de la génération de l'information d'état.

4. Système selon la revendication 1, ***caractérisé en ce que*** l'interface utilisateur mentionnée (161) est prévue au niveau d'un terminal utilisateur (160) et **en ce que** le système de suivi d'état (100) comprend une première unité de communication (151) pour permettre au processeur d'envoyer des données à l'interface utilisateur (161).

5. Système selon la revendication 4, ***caractérisé en ce que*** la première unité de communication mentionnée (151) est configurée pour effectuer une communication sans fil.

6. Système selon la revendication 1, ***caractérisé en ce qu***'il comprend une deuxième unité de communication (152) pour assurer que l'information d'état et/ou les mesures générées par l'unité de processeur mentionnée (110) sont envoyées à un serveur (300).

7. Système selon la revendication 6, ***caractérisé en ce que*** l'unité de mémoire mentionnée (120) est prévue sur un serveur (300).

8. Système selon la revendication 1, ***caractérisé en ce que*** l'unité de capteur mentionnée (130) est placée dans une encoche prévue dans la pièce (200).

9. Système selon la revendication 1, ***caractérisé en ce que*** l'unité de capteur mentionnée (130) est connectée à la pièce (200) avec un adhésif.

10. Système selon la revendication 1, dans lequel la pièce est un triangle de suspension du véhicule.

11. Système selon la revendication 1, **dans lequel** l'unité de processeur est en outre configurée pour se connecter à une unité de capteur de véhicule et recevoir des mesures d'inclinaison effectuées par l'unité de capteur de véhicule, dans lequel les mesures d'inclinaison sont des mesures d'une inclinaison du véhicule, et dans lequel l'information d'état désigne une condition de la pièce déterminée par l'unité de processeur sur la base des mesures d'inclinaison en plus des mesures de la pièce.
